# EUROPEAN PATENT SPECIFICATION

(11) **EP 1 913 839 B1**
(45) Date of publication and mention of the grant of the patent: **09.06.2010**
(21) Application number: 07118898.1
(22) Date of filing: 19.10.2007
(51) Int. Cl.: A47B 13/02

(54) **Coupling element for table legs**
Kopplungselement für Tischbeine
Élément de couplage pour montants de table

(30) Priority: 20.10.2006 IT VI20060309
(43) Date of publication of application: 23.04.2008
(73) Proprietor: NARDI S.p.A., I-36072 Chiampo (VI) (IT)
(72) Inventor: Nardi, Giampietro, 36072, Chiampo (VI) (IT)
(74) Representative: Bonini, Ercole

(56) References cited:
- EP-A- 1 208 767
- GB-A- 981 986
- GB-A- 2 394 021
- US-A- 3 131 899
- US-A- 3 379 398

## Description

The present invention concerns a coupling element for table legs, in particular for the legs of plastic tables.

According to a known type of construction, the legs are attached to the table top by means of a hinge connection.

In this case, the hinge allows the legs to be folded when the table is not used.

However, the manufacture of this type of table involves rather high costs, since it is necessary to make hinges and pins for coupling to the hinges.

According to another type of construction, the legs are attached to the tables by fitting them in suitable seats provided on the lower surface of the table top.

The coupling can be simple with a male-female joint, or with a bayonet joint.

The coupling, however, often poses the drawback that it creates a slack between the legs and the table top, so that the legs do not provide stable support for the table.

Consequently, to position the table on the floor and ensure the degree of stability desired it may be necessary to add support elements to the feet of the legs.

As regards types of coupling other than bayonet joints, for example coupling by means of threads, mass production of a table leg threaded at one end is difficult and also rather costly, especially in the case of legs exceeding a certain length.

*Document* EP 1 208 767 *discloses a coupling element comprising an external element, insertable in a hollow tubular leg, and coupled to a cone body suitable to force the expansion of the external element, so to fix it to the leg*.

The object of the present-invention is to obtain a leg-table coupling that ensures the maximum stability of the table, reducing as much as possible any slacks between the leg and the table top.

A further object of the present invention is to obtain a leg-table coupling that is not too expensive, eliminating the need to manufacture a table leg with an integral thread at one end for coupling to the table.

The objects described above have been achieved through the construction of a table leg whose main characteristics are in accordance with those described in the first claim.

According to the invention, one end of each leg is fitted with a coupling element with a threaded projection that can be screwed onto the corresponding internal thread present on the lower surface of the table top.

Advantageously, the table leg carried out according to the invention allows the leg itself to be screwed to the table top, which considerably reduces any slacks between the leg and the table top.

All the advantages deriving from a screw coupling are thus granted, even though the threaded part is not made in a single piece with the table leg.

Still advantageously, the coupling element for table legs carried out according to the invention can be easily adapted to legs having any diameter.

Still advantageously, the table leg carried out according to the invention is simple and not too expensive to construct.

The objects and advantages described above will be highlighted in greater detail in the description of a preferred embodiment of the invention that is supplied as an indicative, non-limiting example with reference to the enclosed drawings, wherein:
- Figure 1 shows the coupling element carried out according to the invention;
- Figure 2 shows a cross section of the coupling element carried out according to the invention before insertion in a table leg;
- Figure 3 shows a cross section of the coupling element of Figure 2 already inserted in a table leg and before being screwed into the corresponding seat in a table;
- Figure 4 shows a complete table where the coupling element carried out according to the invention has been inserted in each leg.

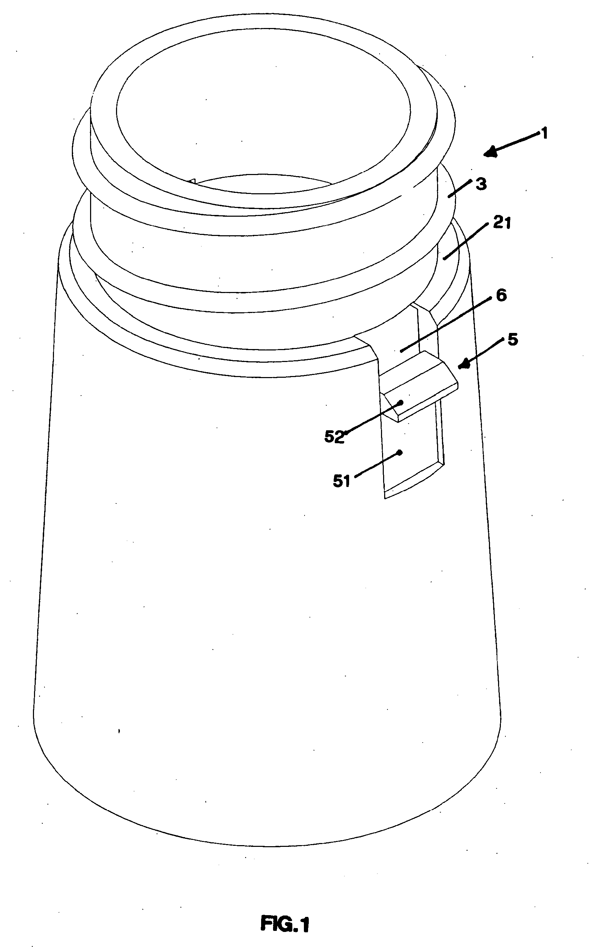

As shown in Figure 1, the coupling element for table legs that is the subject of the invention, indicated as a whole by **1,** comprises a body **2** preferably made of plastic and characterized by a certain degree of elasticity typical of plastic materials.

Alternatively, the coupling element **1** can be made of a metallic material, preferably aluminium.

The body **2** is substantially tubular, with a truncated cone-shaped base that tapers at the level of the end **21** and ends with a cylindrical thread **3.**

It can also be observed that the coupling element **1** is provided with a plurality of wings **5** projecting from the body **2** of the coupling element **1.**

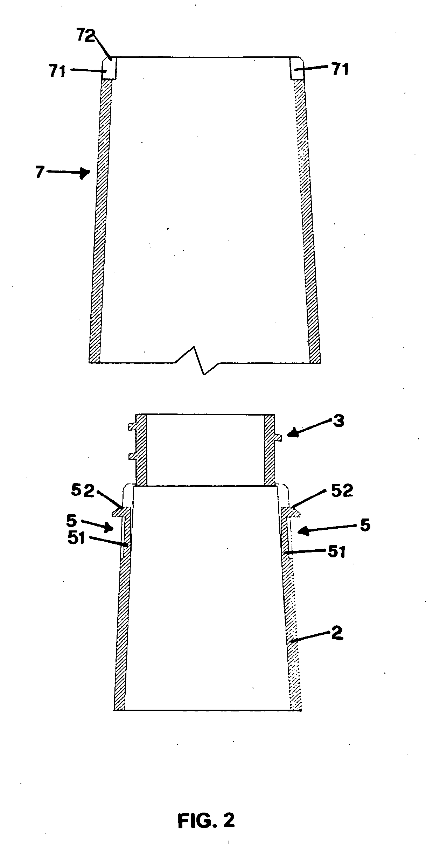

In particular, Figure 2 also shows that the wings **5** comprise a wall **51** that is substantially parallel to the profile of the truncated cone-shaped body **2.**

As shown in Figure 1, the wing **5** is positioned in a recess **6** created on the surface of the body **2** during pressing/moulding of the coupling element **1.**

The coupling element **1,** substantially in the shape of a truncated cone, is inserted in the end of each leg **7,** said end having a truncated cone-shaped profile suited to be matched with said coupling element.

When the coupling element **1** is inserted in the cavity inside the leg **7,** each one of the wings **5** fits into a corresponding slot **71** present in the end **72** of the leg **7** that has a reduced diameter, thus locking the coupling element **1** definitively in the leg 7.

In this way, the locking means are constituted by the wings **5** that, once fitted in the corresponding slots 71, project from the coupling element 1 and avoid the creation of any slack between the leg and the table top.

The result does not change if the wings are made at the level of the end **72** of the leg **7** and the corresponding slots made in the coupling element **1** instead of the wings **5.**

Thanks to the truncated cone shape of both the coupling element **1** and the leg **7,** the coupling element **1,** once inserted, slides axially in the cavity inside the leg **7** until the base **22** comes into contact with the inner walls of the leg **7** until it becomes locked, once the wings **5** have snapped into the slots **71.**

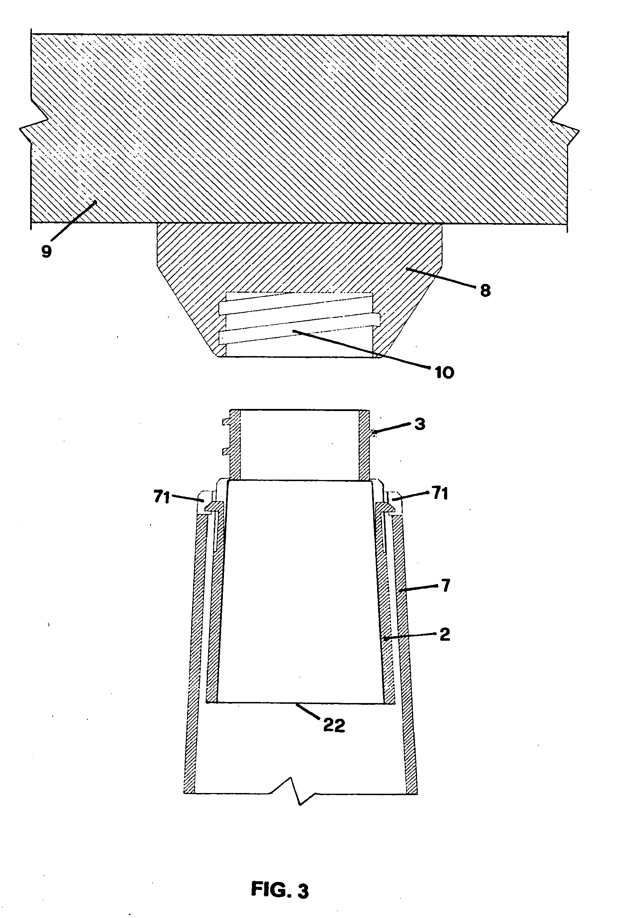

As can be seen, always in Figure 3, the leg **7,** with the coupling element of the invention perfectly inserted therein, has the threaded end **3** of the coupling element **1** that now makes up a single unit with said element, as if the leg **7** had a thread at its end.

After the wings **5** have snapped in, the projecting threaded end **3** is ready to be screwed into a corresponding internal thread **10,** provided in a seat **8** on the lower surface of the top **9** of the table (visible in Figure 3).

The internal thread **10** is preferably obtained by moulding during the production of the table top **9** and is suited to house the threaded end **3** of the coupling element **1** screwed therein.

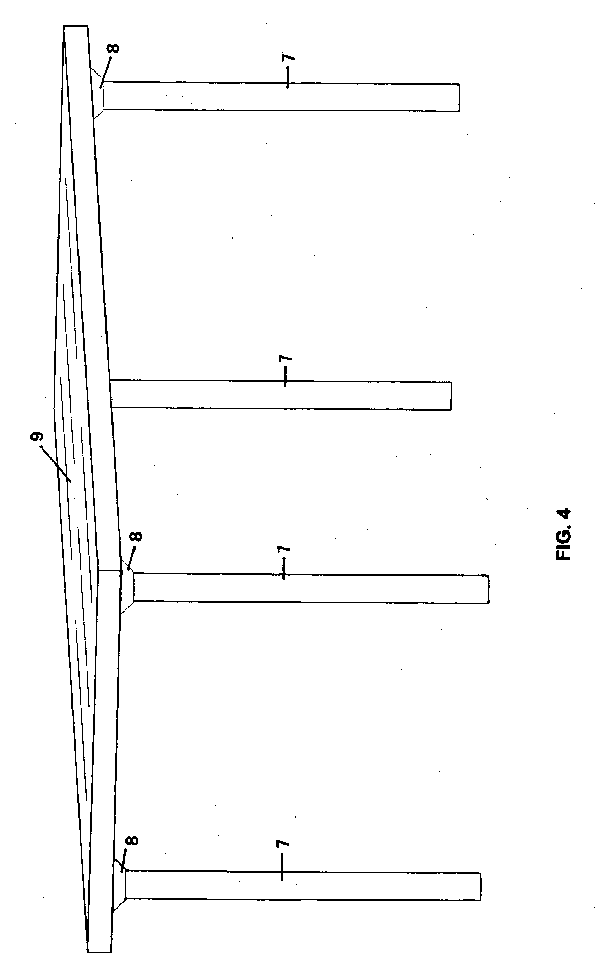

Once the leg **7** with the corresponding coupling element **1** has been completely screwed, the table is complete, as shown in Figure 4.

As can be seen, the coupling element of the invention, thanks to the presence of the wings, ensures the table great stability and solves the problem posed by the slacks between leg and top present in the tables of known type.

Furthermore, the coupling element carried out according to the invention can be produced separately, that is, independently of the leg, by moulding a plastic material, thus reducing the overall cost of the leg - coupling element assembly. Obviously, in the solution proposed by the invention, the leg can have any section, for example square, rectangular or polygonal, since the coupling element **1** can have a compatible, matching shape, notwithstanding the presence of the cylindrical threaded end **3.**

In the construction phase, further changes and modifications can be made to the coupling element for table legs of the invention, which are neither represented nor described herein, but which must all be considered protected by the present patent if they fall within the scope of the following claims.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Table leg (7) suited to be screwed into an internal thread (10) present on the lower surface of the top (9) of a table, provided with a coupling element (1) comprising a body (2) that has a threaded end (3) suited to be coupled with said internal thread (10) of said table, said coupling element (1) being provided with means (5, 6) for locking to said leg (7), said locking means being such as to prevent any mutual movement between said coupling element (1) and the end of said leg (7), **characterized in that** said locking means comprise a plurality of elastic means provided in said coupling element (1) and fitting in corresponding slots (71) present at the end (72) of said leg (7) or vice versa.

2. Table leg (7) according to claim 1, **characterized in that** said elastic means are wings (5).

3. Table leg according to claim 2, **characterized in that** each one of said wings (5) has a wall (51) substantially parallel to the axis of said body (2) and one end (52) projecting from said wall (51).

4. Table leg (7) according to any of the claims 2 or 3, **characterized in that** each one of said wings (5) projects from a corresponding recess (6) present on the surface of the body (2) of said coupling element (1).

5. Table leg (7) according to claim 1, **characterized in that** said coupling element (1) is substantially truncated cone-shaped, in such a way as to be able to be matched with the corresponding end of said leg (7) of said table.

6. Table leg (7) according to any of the preceding claims, **characterized in that** said coupling element (1) is made of a plastic material.

7. Table leg (7) according to any of the preceding claims, **characterized in that** said coupling element (1) is made of a metallic material.

8. Table leg (7) according to claim 7, **characterized in that** said metallic material is aluminium.

## Patentansprüche

1. Tischbein (7), das dazu geeignet ist, in ein Innengewinde (10) eingeschraubt zu werden, das an der unterseitigen Oberfläche der Platte (9) eines Tischs vorhanden ist, und mit einem Kopplungselement (1) ausgestattet ist, welches einen Körper (2) umfasst, der ein mit einem Gewinde versehenes Ende (3) aufweist, das dazu geeignet ist, mit dem Innengewinde (10) des Tischs gekoppelt zu werden, wobei das Kopplungselement (1) mit Mitteln (5, 6) zum Sperren des Beins (7) ausgestattet ist, wobei die Sperrmittel derart sind, dass jedwede Bewegung des Kopplungselements (1) und des Endes des Beins (7) in Bezug aufeinander verhindert ist, **dadurch gekennzeichnet, dass** die Sperrmittel eine Vielzahl an elastischen Mitteln umfassen, die im Kopplungselement (1) bereitgestellt sind und in entsprechende Schlitze (71), die am Ende (72) des Beins (7) vorhanden sind, passen oder umgekehrt.

2. Tischbein (7) nach Anspruch 1, **dadurch gekennzeichnet, dass** die elastischen Mittel Flügel (5) sind.

3. Tischbein nach Anspruch 2, **dadurch gekennzeichnet, dass** jeder der Flügel (5) eine Wand (51), die im Wesentlichen parallel zur Achse des Körpers (2) steht, und eine Ende (52), das von der Wand (51) vorsteht, aufweist.

4. Tischbein (7) nach einem der Ansprüche 2 oder 3, **dadurch gekennzeichnet, dass** jeder der Flügel (5) von einer entsprechenden Vertiefung (6) aus vorsteht, die an der Oberfläche des Körpers (2) des Kopplungselements (1) vorhanden ist.

5. Tischbein (7) nach Anspruch 1, **dadurch gekennzeichnet, dass** das Kopplungselement (1) im Wesentlichen kegelstumpfförmig ist, sodass es mit dem entsprechenden Ende des Beins (7) des Tischs gepaart werden kann.

6. Tischbein (7) nach einem der vorangegangenen Ansprüche, **dadurch gekennzeichnet, dass** das Kopplungselement (1) aus einem Kunststoffmaterial hergestellt ist.

7. Tischbein (7) nach einem der vorangegangenen Ansprüche, **dadurch gekennzeichnet, dass** das Kopplungselement (1) aus einem Metallmaterial hergestellt ist.

8. Tischbein (7) nach Anspruch 7, **dadurch gekennzeichnet, dass** das Metallmaterial Aluminium ist.

## Revendications

1. Pied de table (7) apte à être relié dans un filetage intérieur (10) présent sur la surface inférieure du plateau (9) d'une table, doté d'un élément d'accouplement (1) comprenant un corps (2) qui a une extrémité filetée (3) indiquée pour être accouplée avec ledit filetage intérieur (10) de ladite table, ledit élément d'accouplement (1) étant doté de moyens (5, 6) pour le blocage dudit pied (7), lesdits moyens de blocage étant aptes à empêcher tout mouvement réciproque entre ledit élément d'accouplement (1) et l'extrémité dudit pied (7), **caractérisé en ce que** lesdits moyens de blocage comprennent une pluralité de moyens élastiques présents sur ledit élément d'accouplement (1) qui s'accouplent avec des fentes correspondantes (71) présentes sur l'extrémité (72) dudit pied (7) ou vice versa.

2. Pied de table (7) selon la revendication 1, **caractérisé en ce que** lesdits moyens élastiques sont des ailettes (5).

3. Pied de table selon la revendication 2, **caractérisé en ce que** chacune desdites ailettes (5) présente une paroi (51) essentiellement parallèle à l'axe dudit corps (2) et une extrémité (52) saillant de ladite paroi (51).

4. Pied de table (7) selon l'une quelconque des revendications 2 ou 3, **caractérisé en ce que** chacune desdites ailettes (5) saillit d'un creux correspondant (6) présent sur la surface du corps (2) dudit élément d'accouplement (1).

5. Pied de table (7) selon la revendication 1, **caractérisé en ce que** ledit élément d'accouplement (1) est essentiellement en forme de cône tronqué, de façon à ce qu'il puisse être relié avec l'extrémité correspondante dudit pied (7) de ladite table.

6. Pied de table (7) selon l'une quelconque des revendications précédentes, **caractérisé en ce que** ledit élément d'accouplement (1) est réalisé en matériel plastique.

7. Pied de table (7) selon l'une quelconque des revendications précédentes, **caractérisé en ce que** ledit élément d'accouplement (1) est réalisé en matériel métallique.

8. Pied de table (7) selon la revendication 7, **caractérisé en ce que** ledit matériel est aluminium.
